# EUROPEAN PATENT APPLICATION

(11) **EP 1 484 686 A1**
(43) Date of publication of application: **08.12.2004**
(21) Application number: 03703163.0
(22) Date of filing: 04.02.2003
(51) Int. Cl.: G06F 12/00, G06F 9/445, G06F 13/00, H04N 5/76

(54) **TRANSMISSION ORIGIN DEVICE, TRANSMISSION DESTINATION DEVICE, INFORMATION TRANSMISSION SYSTEM, AND METHOD FOR RECOGNIZING SYSTEM IN INFORMATION TRANSMISSION SYSTEM**

(30) Priority: 08.03.2002 JP 2002064380
(71) Applicant: Sharp Kabushiki Kaisha, Osaka-shi, Osaka 545-8522 (JP)
(72) Inventor: WATANABE, Haruhito, Kamitsuga-gun, Tochigi 322-0606 (JP)
(74) Representative: Müller, Frithjof E., Dipl.-Ing.
(86) International application number: PCT/JP2003/001128
(87) International publication number: WO 2003/077131

(57) **Abstract**

The present invention relates to file transfers between apparatuses. The present invention makes is possible to easily recognize that apparatuses are based on the same system, facilitates a file transfer operation, and avoids complicating the system.

Monitoring resident software 61 resident in a PC 30 detects a folder structure 41 in a digital camera main body 11. The moving resident software 61 then executes file analysis to determine whether or not the detected folder structure 41 contains a file 45 for identifying the present information transmission system 1. On the basis of the results of the analysis, the monitoring resident software 61 activates copy application software 62 in the PC 30 in order to copy an image file 46 present in the digital still camera 11.

## Description

### Technical Field

The present invention relates to a transmission origin apparatus, a transmission destination apparatus, an information transmission system, and a method for recognizing a system in an information transmission system, all of which allow a file required by a user between different systems to be selected and transferred.

### Background Art

There are conventionally a large number of apparatuses that generally have mounted therein a protocol for a mass storage class between systems. By way of a specific example, a removable card reader is known which is used on a personal computer (hereinafter referred to as a PC) to read and write data from and in a memory device.

If an apparatus in which the protocol for the mass storage class is mounted is connected to the PC using a standardized serial interface standard, for example, USB (Universal Serial Bus), the PC recognizes this apparatus as a drive for the PC like an FDD (Floppy Disk Drive) or an HDD (Hard Disk Drive).

The apparatus in which the protocol for the mass storage class is mounted is adapted only to transfer files between systems. Thus, a user selects a required one of the files in the apparatus to transfer the selected file to the PC.

However, in such a system, the PC presently cannot acquire information other than a file in the apparatus to be transferred.

A conventional technique to solve such a problem is, for example, a camera described in Japanese Patent Publication (Kokai) No. 6-350886.

In connection with this camera, an image handling device is shown which specifies a particular one of image data recorded in an information recording medium in a file format, as image data to be transmitted, and then transmits this image data.

The image handling device has characteristics described below. For the image data recorded in the information recording medium in a file format, the image handling device holds plural pieces of image specific information such as directory numbers or file names so that an image file to be transmitted is identified using the image specific information. Then, in response to a transmission instruction, the image handling device transmits image data on sequential image files specified by the held image specific information.

In this case, for the above described image specific information, a file containing the image specific information is provided in a data area of the information recording medium. A receiver analyzes the contents of this image specific information file to execute a process corresponding to the contents.

Another example is a file communication method and device for a file control device described in Japanese Patent Publication (Kokai) No. 8-314789.

This invention provides a mechanism in which both host and personal computer communication user have a detecting device that detects that one of them does not have a file possessed by the other. On the basis of the detection by the detecting device, the file that is not present in one of them is downloaded from the other. This invention is also characterized in that for example, when the file that is not present in one of them is downloaded from the other, a dummy file is generated which has the name of the registered file present in the other but does not have any contents.

The techniques described in both publications are basically the same in that a file is utilized to provide a mechanism for a file to be download and that the PC loads the former file, while the receiver generates information for a rewrite.

Problems with apparatus such as a removable card reader, previously described, are that the protocol for the mass storage class basically allows one (PC) of the apparatus and PC to only manually transfer a file and that the apparatus cannot recognize that they are based on the same system.

Further, the conventional techniques described in Japanese Patent Publication (Kokai) Nos. 6-350886 and 8-314789 attempt to provide a mechanism for a file to be downloaded and are mainly intended to, for example, make settings for the image file to be downloaded or execute a media conversion on the file. Accordingly, these techniques require intra-file link information and linked files to be always in a one-to-one ratio. This disadvantageously complicates the system itself.

In view of these problems, it is an object of the present invention to provide a transmission origin apparatus, a transmission destination apparatus, an information transmission system, and a method for recognizing a system in an information transmission system, all of which relate to file transfers between apparatuses, make is possible to easily recognize that apparatuses are based on the same system, facilitate a file transfer operation, and avoid complicating the system.

### Disclosure of the Invention

The present invention is made to solve the previously described problems. The present invention provides a transmission origin apparatus for an information transmission system which allows a file to be transmitted between apparatuses based on different systems, characterized by comprising transmission origin storage means to which the file to be transmitted is saved and identifying file generating means for generating, in the transmission origin storage means, an identifying file having a unique structure used to identify the transmission origin, in addition to the file to be transmitted, on the basis of a folder structure pre-standardized between the transmission origin apparatus and a transmission destination apparatus.

The present invention also provides a transmission destination apparatus for an information transmission system which allows a file to be transmitted between apparatuses based on different systems, characterized by comprising transmission destination storage means to which the transmitted file is saved, monitoring means for detecting that a folder structure in a transmission origin storage means provided in a transmission origin apparatus matches a folder structure pre-standardized between the transmission origin apparatus and the transmission destination apparatus to identify an identifying file contained in the folder structure and having a unique structure used to identify the transmission origin, and saving means for saving, to the transmission origin storage means of the transmission origin apparatus, a file other than the identifying file saved to the transmission destination storage means, on the basis of results of the identification by the monitoring means.

The present invention provides an information transmission system that transmits a file between apparatuses based on different systems, characterized by comprising a transmission origin apparatus and a transmission destination apparatus connected together using a standardized serial interface standard, the transmission destination apparatus comprising transmission origin storage means to which the file to be transmitted is saved and identifying file generating means for generating, in the transmission origin storage system, an identifying file having a unique structure used to identify the transmission origin, in addition to the file to be transmitted, on the basis of a folder structure pre-standardized between the transmission origin apparatus and a transmission destination apparatus, the transmission destination comprising transmission destination storage means to which the transmitted file is saved, monitoring means for detecting that a folder structure in a transmission origin storage means provided in a transmission origin apparatus matches a folder structure pre-standardized between the transmission origin apparatus and the transmission destination apparatus to identify an identifying file contained in the folder structure and having a unique structure used to identify the transmission origin apparatus, and saving means for saving, to the transmission destination storage means of the transmission origin apparatus, a file other than the identifying file saved to the transmission origin storage means, on the basis of results of the identification by the monitoring means.

The present invention provides a method for recognizing a system in an information transmission system which transmits a file between apparatuses based on different systems, characterized by comprising a folder structure detecting step of detecting a folder structure in transmission origin storage means of a transmission origin apparatus to which the file to be transmitted to transmission destination storage means of a transmission destination apparatus is saved, an identifying file monitoring step of detecting that the folder structure in the transmission origin storage means detected in the folder structure detecting step matches a folder structure pre-standardized to identify an identifying file contained in the folder structure and having a unique structure used to identify the transmission origin, and a copy activation control step of activating and controlling, on the basis of results of the identification in the identifying file monitoring step, copy means for copying a file other than the identifying file saved to the transmission origin storage means, to the transmission destination storage means.

Therefore, the present invention relates to file transfers between apparatuses, and makes it possible to easily recognize that apparatuses are based on the same system, facilitate a file transfer operation, and avoid complicating the system itself

### Brief Description of the Drawings

Figure 1 is a schematic diagram showing the configuration of an information transmission system according to an embodiment of the present invention;
Figure 2 is a diagram showing the system configuration of the information transmission system according to the present embodiment;
Figure 3 is a flow chart showing the configuration of the information transmission system according to the present embodiment; and
Figure 4 is a table showing the format structure of an identifying file detected by monitoring resident software described in Figure 2.

### Best Mode for Carrying Out the Invention

With reference to the accompanying drawings, a preferred embodiment of the present invention will be described in detail by taking, by way of example, a system that transfers images photographed using an image sensor system such as a digital still camera or the like, to a PC.

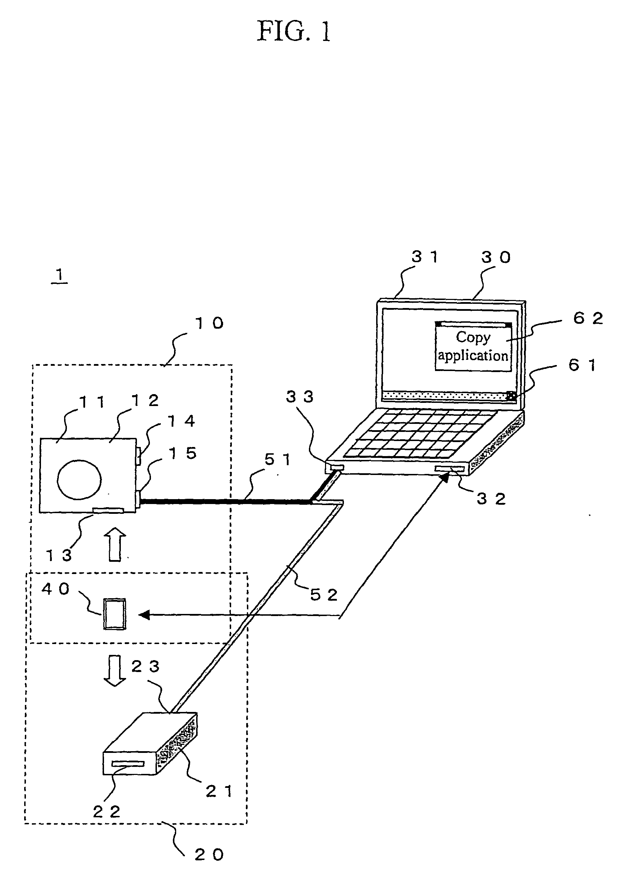

Figure 1 is a schematic diagram showing the configuration of an information transmission system according to an embodiment of the present invention.

In an information transmission system 1 according to the present embodiment, an image sensor system 10 and a card reader 20 are data-connected to a PC 30 using a standardized serial interface.

The image sensor system 10 is composed of, for example, a digital still camera 11. The digital still camera 11 saves photographed images to a memory card device 40 operating as an external recording medium. Thus, a main body 12 of the digital still camera 11 is provided with a memory card device insertion slot 13 into which the memory card device 40 is removably inserted.

Further, the main body 12 of the digital still camera 11 is provided with an operation button (operation switch) 14 and a USB terminal 15.

The operation button 14 is an operation switch used to activate a copy application required to copy a file saved to a memory (not shown) in the main body 12.

The USB terminal 15 is a terminal (based on a standardized serial interface standard) used to transmit and receive data to and from the PC 30.

Thus, the memory in the main body 12 of the digital still camera 11 and the memory card device 40, installed in the memory card device insertion slot 13, can transmit and receive data to and from the PC 30 via a USB cable 51 connected to the USB terminal 15.

On the other hand, the card reader 20 allows data to be read from and written in the memory card device 40, which can also be installed in the previously described digital still camera 11. A main body 21 of the card reader 20 is provided with an insertion slot 22 into which the memory card device 40 is removably installed and a USB terminal 23 used to transmit and receive data to and from the PC 30, described later. The card reader 20 can transmit and receive data to and from the PC 30 via a USB cable 52 connected to the USB terminal 23.

Thus, data (in this case, an image file) photographed using the digital still camera 11 and saved to the memory card device 40 installed in the slot 13 can be transferred not only by directly connecting the previously described digital still camera 11 and PC 30 together via the USB cable 51 but also by removing the memory card device 40 from the main body 12 and installing it in the card reader 20, to PC 30.

In contrast, a main body 31 of the PC 30 comprises a USB terminal 33 to which connects the USB cables 51 and 52, connected to the above described digital still camera 11 and the card reader 20, respectively.

The main body 31 of the PC 30 also comprises a memory card device insertion slot 32 according to the present embodiment.

Thus, an image file photographed using the digital still camera 11 and saved to the memory card device 40 can be directly read and written the data using the PC 30, by installing the memory card device 40 in the slot 32.

These arrangements enable the PC 30 to recognize the memory card device 40 installed in the memory card device insertion slot 13 of the data digital still camera 11 and the memory card device 40 installed in the insertion slot 22 of the card reader 20, on the basis of a removable drive format (a built-in drive format depending on an OS (Operating System)), as in the case of the memory card device 40 installed in the memory card device insertion slot 32 of the main body 31 of the PC 30.

Moreover, monitoring resident software 61 and copy application software 62 are operatively preinstalled in the PC 30.

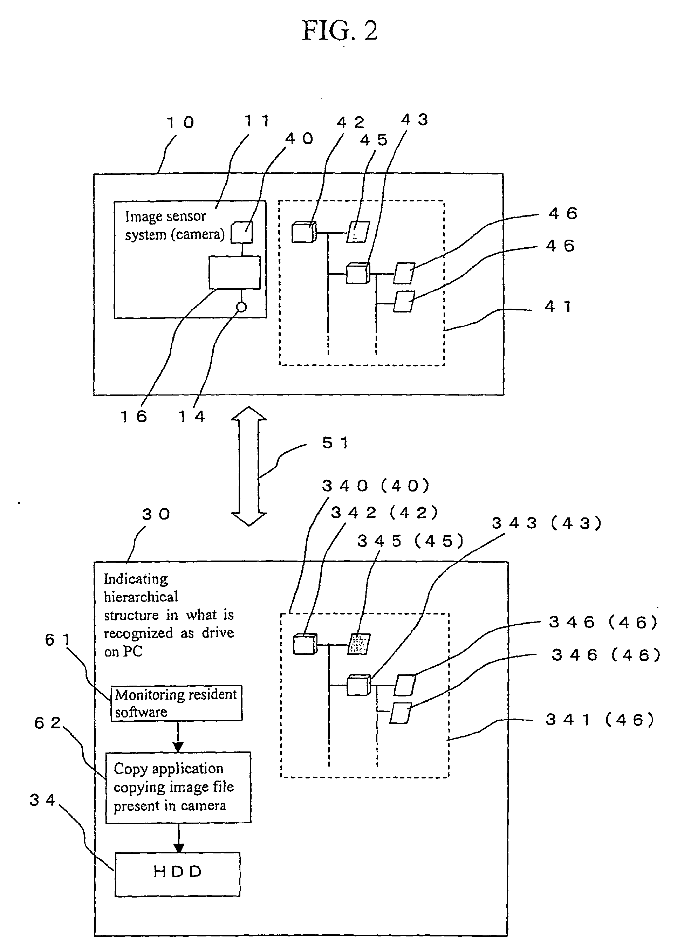

The copy application software 62 copies a group of image data to be copied which is contained in a folder structure in a drive recognized by the PC 30 as a removable media drive, to an HDD 34 (shown in Figure 2, described later) operating as saving means of the PC 30.

Now, description will be given of copying of the group of image data to be copied.

Figure 2 is a diagram showing the system configuration of an information transmission system according to the present embodiment.

This figure shows a system configuration in which the digital still camera 11, constituting the image sensor system 10, is USB- connected to the PC 30, a destination apparatus, using the USB cable 51.

In the description of the configuration, components already described in Figure 1 are denoted by the same reference numerals and their description is omitted.

As shown in the figure, in the image sensor system 10, the file storage folder structure 41 of the memory card device 40 mounted in the digital still camera 11 is hierarchical folder structure and includes a root folder 42 ad a subfolder 43 generated by the digital still camera 11.

In this case, the root folder 42 stores the identifying file 45 for the digital still camera 11 generated by the identifying file generating means 16, provided in the digital still camera 11, operating as the image sensor system 10. In contrast, the subfolder 43 stores the file (image file) 46 photographed using the digital still camera 11.

Then, in the information transmission system 1 according to the present embodiment, the monitoring resident software 61, provided in the previously described PC 30, detects and executes file analysis on the file storage folder structure 41 of the memory card device 40 of the image sensor system 10 and the identifying file 45 in the file storage folder structure 41.

As a result, when the detected and file-analyzed identifying file 54 is recognized as the identifying file 45 of the transmission origin preset by the present system 1, the copy application software 62, provided in the PC 30, is automatically activated by the previously described monitoring resident software 61.

Specifically, when the digital still camera main body 11 is connected to the PC 30 on the basis of the USB connection between the digital still camera 11 and the PC 30 using the USB cable 51, all of the hierarchical folder structures 42 and 43, saved in the memory card device 40, and the file groups 45 and 46 in the folder structures can be viewed on the PC 30.

This indicates that the file storage folder structure 41 of the memory card device 40, configured as described above, is recognized by the PC 30 as a file storage folder structure 341 of a drive 340 connected to the PC 30.

On the basis of this recognition, the root folder 42 and subfolder 43 in the file storage folder structure 41 of the memory card device 40 are recognized as a root folder 342 and a subfolder 343 in the file storage folder structure 341 of the drive 340 as viewed from the PC 30.

Accordingly, the identifying file 45 for the memory cad device 40 installed in the digital still camera 11 is stored in the root folder 342 recognized by the PC 30, as an identifying file 345. The file (image file) 46 photographed using the digital still camera 11 is stored in the subfolder 343 as a file (image file) 346.

Thus, the information transmission system 1 according to the present embodiment is configured to use the monitoring resident software 61, which is resident in the PC 30, to detect the folder structure 41 (341) in the digital camera main body 11 and to analyze the detected folder structure 41 (341) to determine whether or not the file structure of the identifying file 45 (345) has the same file format and data contents as those of an identifying file in the transmission origin which are pre-specified for the present system 1.

As a result, in the information transmission system 1 according to the present embodiment, upon determining that the file structure of the detected identifying file 45 (345) has the predefined predetermined file format and that the contents of predetermined item data in the predefined predetermined file format match pre-specified contents by the monitoring resident software 61, the monitoring resident software 61 activates the copy application software 62 in the PC 30 in order to copy the image file 46 (346) present in the digital still camera 11.

Subsequently, every time the previously described copy application software 62 is activated by the monitoring resident software 61, a particular folder is generated for the HDD 34 of the PC 30, the files of the file group 46 (346) in the memory card device 40 (340) which have been photographed using the camera, other than the identifying file 45 (345), are copied to the particular folder to complete the series of information transmission sequence.

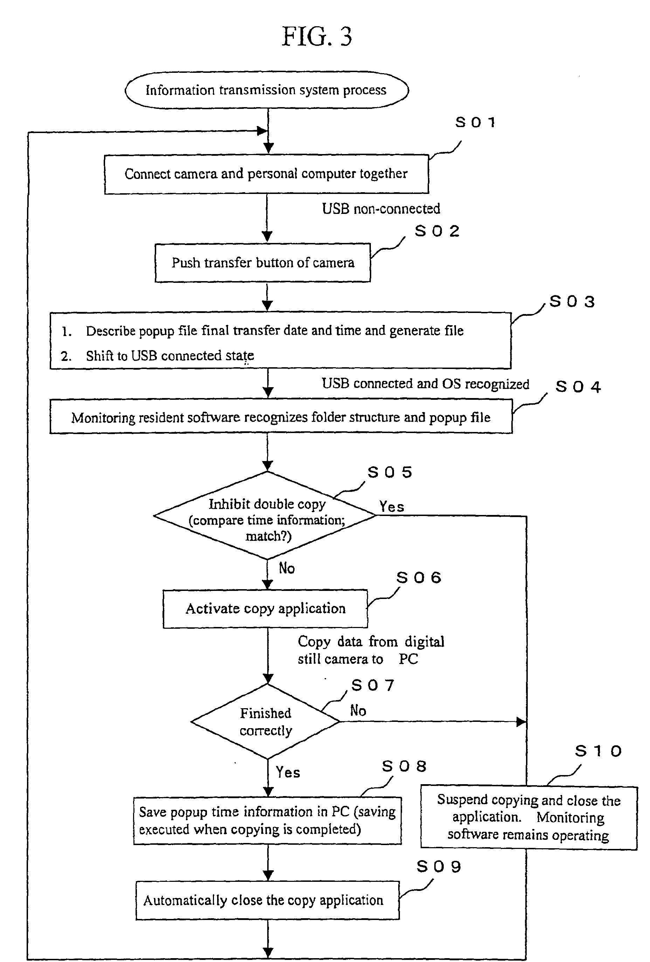

Figure 3 is a flow chart of the information transmission system according to the present embodiment.

On the basis of the flow chart, operations of the above described information transmission system will be described in detail with reference to Figures 1 and 2 as required.

First, the user connects the USB terminals 15 and 33 of the digital still camera 11 and PC 30 together using the USB cable 51 (step S01).

In this state, the USB connection between the digital still camera 11 and the PC 30 is not activated yet, that is, is not electrically established.

Then, the user pushes the operation button 14, provided on the main body 12 of the digital still camera 11 (step S02).

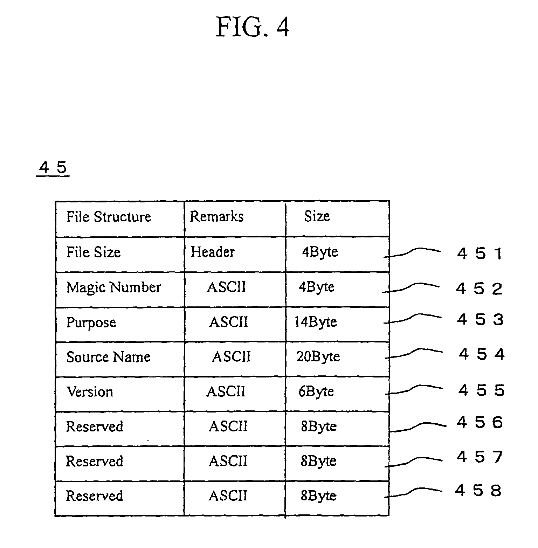

Pushing the operation button 14 first activates the file generating means 16 in the digital still camera 11. The file generating means 16 generates the identifying file 45 in the memory card device 40 installed in the inserting slot 13, in accordance with the format shown in Figure 4, described later. When the identifying file 45 is generated, a popup file final transfer date and time is described in the identifying file 45 (step S03). Once the identifying file 45 is completely generated in the memory card device 40, the digital still camera 11 activates the USB terminal slot (USB terminal) 33 in the PC 30 (step S03).

Thus, a plug and play function provided in the OS of the PC 30 recognizes the USB system in the digital still camera 11. Further, a device driver attached to the digital still camera 11 is loaded.

Then, the USB driver of the mass storage class installed in the PC 30 is loaded into the OS.

Thus, in a higher layer in the OS of the PC 30, the memory card device 40 installed in the digital still camera 11 is recognized as the drive 340 of the PC 30. As a result, if the OS of the PC 30 is Windows (a trade mark of Microsoft), then in the icon My Computer, the memory card device 40 is recognized as one of the storage devices connected to the PC 30.

On the other hand, the PC 30 recognizes the file storage folder structure 41, including the root (hierarchical) folder 42, generated by the digital still camera 11, is recognized as the file storage folder structure 341 of the drive 340 connected to the PC 30.

The previously described monitoring resident software 61 is resident in a task of the PC 30 to check the folder structure 341 of the newly generated drive 340 of the PC 30 and the files 345 and 346 in the folder structure.

Consequently, the monitoring resident software 61 also checks the folder structure 341 (corresponding to the folder structure 41 of the memory card device 40) in the drive 340 (corresponding to the memory card device 40) newly generated by the USB connection between the digital still camera 11 and the PC 30 in the previously described step S01, as well as the files 345 and 346 (corresponding to the files 45 and 46 in the memory card device 40).

During this check, a preventive check for a double copy is also carried out to prevent the user from installing the memory card device 40 already copied the file 46 from the digital still camera 11 to the HDD 34 in the PC 30, in the card reader 20 or the slot 22 or 32 of the PC 30, so that a plurality of copies of the file 46 with the same contents may be created in the HDD 34 of the PC 30.

Now, a detailed description will be given of the function of a preventive check for a double copy.

The function of a preventive check for a double copy is based on:
① the popup file final transfer date and time described in the identifying file 45, generated in the memory card device 40, by the file generating means 16 of the digital still camera 11, activated by pushing the operation button 14, as described in the previously described step S03, and
② time information in the file 345 (corresponding to the final transfer date and time described in the identifying file 45 for the memory card device 40) saved in a registry or cache file in the PC 30 if the file 46 in the memory card device 40 has been completely copied to the HDD 34 of the PC 30 correctly, as described later for a step S08.

That is, if the memory card device 40 having its file 46 already copied from the digital still camera 11 to the HDD 34 of the PC 30 is installed in, for example, the insertion slot 22 of the card reader 20, the monitoring resident software 61 in the PC 30 also recognizes the installed memory card device 40 as the drive 340 of the PC 30 as in the case of the previously described step S04.

For example, a common removable media drive such as the card reader 20 does not comprise an arrangement for changing time information on a removable medium such as the installed memory card device 40.

In other words, there is no such an arrangement as describes the popup file final transfer date and time in the identifying file 45 for the installed memory card device 40 every time the operation button 14 is pushed to execute copying for the identifying file 45, as in the case of the above described digital still camera 11.

Thus, in the information transmission system 1 according to the present embodiment, the monitoring resident software 61 in the PC 30 executes the process of a preventive check for a double copy by comparing the popup file final transfer date and time (same as the time information described in the identifying file 345 in the storage device 340 of the PC 30) described in the identifying file 45 generated in the memory card device 40 as previously described in ①, with the time information saved in the registry or cache file in the PC 30 as previously described in ②.

In the process of a preventive check for a double copy, if the time information described in the memory card device 40, the transmission origin, installed in the removable media drive matches the time information for the file saved to the HDD 34 of the PC 30, the transmission destination, it is determined that the file 45 in the memory card device 40 of the transmission origin and the file saved to the HDD 34 of the PC 30, the transmission destination , have the same contents. In contrast, if the files have different pieces of time information, it is determined that the data contents of the file 45 in the memory card device 40, the transmission origin, are not saved to the HDD 34 of the PC 30, the transmission destination, as a file.

Accordingly, for the determination for the preventive check for a double copy shown in the step S05 in Figure 3, the above two pieces of time information match only if, for example, the user removes the memory card device 40 having its file 46 already copied from the digital still camera 11 to the HDD 34 of the PC 30 and then installs it in a removable media drive such as the card reader 20 USB-connected to the PC 30. Then, the process shifts to a step S 10, described later, to prohibit automatic copying.

On the other hand, if, for example, the memory card device 40 having its file 46 already copied from the digital still camera 11 to the HDD 34 of the PC 30 is newly copied to another PC 30 or copied to the PC 30 by pushing the operation button 14 of the digital still camera 11 in which the memory card device 40 has been installed, the above two pieces of time information do not match. Accordingly, the process proceeds to the next step S06 to start automatic copying.

As a result, the above described function of a preventive check for a double copy can prevent information loaded into the PC 30 from being repeatedly copied to the same PC 30.

If the monitoring resident software 61 confirms in the step S05 that the folder structure 341 of the drive 340 recognized on the PC 30 and the file format and data contents of the identifying file 345 in the folder structure 341 are as pre-specified for the information transmission system 1 and are not doubly copied, then the copy application software 62 of the monitoring resident software 61 is automatically activated in order to copy the file 346 present in the drive 340 (step S06).

Then, the copy application software 62 automatically activated by the monitoring resident software 61 first generates a new unique folder (that is, the previously described particular folder) in the memory device of the HDD 34 or the like in the main body 31 of the PC 30.

Further, the copy application software 62 copies each file 346 in the drive 340, that is, each file of the file group 46 photographed using the camera 11 and contained in the memory card device 40 of the digital still camera 11 in the newly unique folder. The copy application software 62 attaches a file name to this file which is different from that of the previously described file 346 and then saves the file (step S07).

Once this saving operation is correctly finished ("Yes" in a step S07), the copy application software 62 saves the same time information as that described in the identifying file 345 in the drive 340, in the registry or cache file in the PC 30 as previously described in ② (step S08). Thus, the copy application software 62 automatically activated by the monitoring resident software 61 is automatically closed (step S09).

If any trouble, for example, disconnection, occurs during the above described copying operation ("No" in the step S07), the copying is suspended to close the copy application software 62 (step S10). However, the monitoring resident software 61 remains operating.

Figure 4 is a table showing the format structure of the identifying file detected by the monitoring resident software described in Figure 2.

On the basis of this file format, during the processing in the step S03 in Figure 3, the identifying file 45 is generated by the identifying file generating means 16 in the memory card device 40 installed in the memory device insertion card slot 13.

In the HDD 34 (see Figure 2) of the PC 30, a header 451 of the identifying file 45 shows a total file size minus 4 bytes corresponding to the length of the header 451, as a predefined predetermined file format.

In the present embodiment, the format of the identifying file 45 includes a 4-byte file size section (that is, a header) 451, a 4-byte magic number section 452, 14-byte purpose section 453, a 20-byte source name section 454, a 6-byte version section 455, and three 8-byte reserved sections 456 to 458.

Here, the magic number section 452 shows a magic number of the recognizing file 45 which is a name unique to this file expressed in ASCII. The purpose section 453 shows a purpose of this file expressed in the ASCII. It is displayed in 14 bytes like "IG_ _ _ _ _ _ _ _ _ _ _ _ ". _ is provided to allow the specific number of bytes to be effectively utilized if the system is expanded in the future. For example, there are 12 bytes of _, so that up to 4,096 kinds of information can be handled by expressing this in bits. If this file belongs to a first generation in which the present system is used, it is used for simple automatic copying. However, if a more complicated process is executed in the future, then the content and the purpose will be different from that in the first generation. For example, contents meeting the new purpose are added to the reserve sections 457 and 458, which are presently "reserved". However, an expansion mechanism is already provided so as to prevent problems with such an expansion. The source name section 454 shows a generated apparatus name as a source name which is expressed in ASCII. The version section 455 shows version information on this file in ASCII. Further, the remaining reserve sections 456 to 458, composed of 24 bytes in total, are used for a future expansion. In the present embodiment, the reserve section 456 shows the popup file final transfer date and time, saved by pushing the operation button 14 of the digital still camera 11 by the process in the step S03 in Figure 3.

In this manner, the file structure of the identifying file 45 is such that the whole identifying file except for the 4 bytes of header is expressed in ASCII, as described above. This enables a faster recognition in the digital still camera 11.

In contrast, the header 451 shows the total number of bytes in the file minus the number of bytes in the header, which is expressed using big endian. This makes it possible to easily execute error checks to determine whether or not the present file has been destroyed. If, for example, the data is altered for any reason, the file has a different total number of bytes. Provided that the total number of bytes in the file is described in the header, it can be easily and quickly determined whether or not the file is broken in the application dealing with it and the file itself is reliable, without the need to check the contents of the file. In the subsequent check on the folder structure 341 and the files 345 and 346 in the folder structure 341, which check is executed during the processing in the step S03 in Figure 3, when the magic number in the magic number section 452, the purpose of the file in the purpose section 453, and the version information in the version section 455 match and the time information in the previously described reserve section 456 does not match the time information saved in the step S08 in Figure 3, the monitoring resident software 61 activates the copy application software 62 in the personal computer main body 31 in order to copy the image file present in the digital still camera.

That is, the identifying file 45 has a basically variable file size and can be expanded as required.

According to the information transmission system of the present embodiment, the user can easily transfer the file 46 present in the memory card device 40 to the PC 30 simply by USB-connecting the digital still camera 11 in which the memory card device 40 has been installed, to the PC 30, and without any manual operations on the PC 30. The user can also easily transfer the file 46 present in the memory card device 40 to the PC 30 simply by installing the memory card device 40 in the slot 22 or 32 of the card reader 20 or PC 30, respectively.

Then, the identifying file generating means 16, provided in the transfer origin (transmission origin), generates an identifying file 45. The monitoring resident software 61 in the transfer destination (transmission destination) detects the folder structure 41 in the transfer origin and checks the identifying file 45 in the detected folder structure 41. Then, on the basis of the results of the check, the copy application software 62 in the transfer destination is activated. This prevents the complication of the system configuration.

During the above transfer, the function of a preventive check for a double copy can prevent information loaded into the PC 30 from being repeatedly copied to the same PC 30. Specifically, when the memory card device 40 installed in the digital still camera 11 is removed from the main body 12 and then inserted into the card reader 20 operating as a removable media drive, the monitoring resident software 61 in the PC 30 recognizes the popup file final transfer date and time. Since the time information in a popup file for already copied information is saved in the PC 30, double copying can be prohibited if this time information matches the time information in a popup for previously connected and recognized information.

In the present embodiment, the identifying file 45 is generated by the identifying file generating means 16 in the memory card device 40 when the user operates the operation button 14, provided on the digital still camera 11 for transfers. However, it is possible to arbitrarily change a timing for causing the identifying file generating means 16 to generate an identifying file 45 in the memory card device 40 as long as the memory card device 40 is installed in the digital still camera 11.

The information transmission system according to the present embodiment is configured as described above. However, the present invention is not limited to the above embodiment.

For example, in the above described embodiment, description has been given of the system comprising the removable media card reader such as the card reader device wherein the camera includes the USB terminal and the protocol for the mass storage class for communications via the USB to transfer still image files or the like to and from the PC.

However, the information transmission system according to the embodiment of the present invention is not limited to the above one provided that the host generates and saves an identifying file to a particular folder so that when child software resident in a terminal finds the particular folder to discover the identifying file, application software having an automatic copy function is activated on the results of checks on the identifying file.

Many variations are possible. For example, when the memory card device 40 shown in Figure 1 is installed in a commercially available USB card reader or the like and is then connected to the main body 31 of the PC 30, the monitoring resident software 61 resident in the PC 30 senses the memory card device 40 and the folder structure 41 to execute a similar sequence.

### Industrial Applicability

As described above, according to the transmission origin apparatus, transmission destination apparatus, and information transmission system of the present invention, connecting the transmission origin storage means of the transmission origin apparatus to the transmission destination storage means of the transmission destination apparatus eliminates the needs for cumbersome manual operations on the transmission source apparatus for a file transfer to facilitate the file transfer operation even if the transmission origin apparatus is a USB device of the mass storage class. Moreover, it is possible to avoid complicating the system itself to easily control the transmission destination apparatus. Further, although the mass storage class inherently executes only file transfers, that is, it has only what is called a file transfer exclusive function, the present invention can automatically control the copy application in the transmission destination apparatus and activate and execute it.

Furthermore, according to the method for recognizing a system in an information transmission system according to the present invention, it is possible to prevent double copying of information in the transmission origin storage means of the transmission origin apparatus which has already been copied.

## Claims

1. A transmission origin apparatus for an information transmission system which allows a file to be transmitted between apparatuses based on different systems, **characterized by** comprising:
transmission origin storage means to which the file to be transmitted is saved; and
identifying file generating means for generating, in the transmission origin storage system, an identifying file having a unique structure used to identify the transmission origin, in addition to the file to be transmitted, on the basis of a folder structure pre-standardized between the transmission origin apparatus and a transmission destination apparatus.

2. A transmission destination apparatus for an information transmission system which allows a file to be transmitted between apparatuses based on different systems, **characterized by** comprising:
transmission destination storage means to which the transmitted file is saved;
monitoring means for detecting that a folder structure in a transmission origin storage means provided in a transmission origin apparatus matches a folder structure pre-standardized between the transmission origin apparatus and the transmission destination apparatus to identify an identifying file contained in the folder structure and having a unique structure used to identify the transmission origin; and
saving means for saving, to the transmission destination storage means, a file other than the identifying file saved to said transmission origin storage means of the transmission origin apparatus, on the basis of results of the identification by the monitoring means.

3. An information transmission system that transmits a file between apparatuses based on different systems, **characterized by** comprising:
a transmission origin apparatus and a transmission destination apparatus connected together using a standardized serial interface standard, the transmission origin apparatus comprising:
transmission origin storage means to which the file to be transmitted is saved; and
identifying file generating means for generating, in the transmission origin storage system, an identifying file having a unique structure used to identify the transmission origin, in addition to the file to be transmitted, on the basis of a folder structure pre-standardized between the transmission origin apparatus and a transmission destination apparatus,
the transmission destination apparatus comprising:
the transmission apparatus storage means to which the transmitted file is saved;
monitoring means for detecting that a folder structure in a transmission origin storage means provided in a transmission origin apparatus matches a folder structure pre-standardized between the transmission origin apparatus and the transmission destination apparatus to identify an identifying file contained in the folder structure and having a unique structure used to identify the transmission origin; and
saving means for saving, to the transmission destination storage means, a file other than the identifying file saved to said transmission origin storage means, on the basis of results of the identification by the monitoring means.

4. A method for recognizing a system in an information transmission system which method transmits a file between apparatuses based on different systems, **characterized by** comprising:
a folder structure detecting step of detecting a folder structure in transmission origin storage means of a transmission origin apparatus to which the file to be transmitted to transmission destination storage means of a transmission destination apparatus is saved;
an identifying file monitoring step of detecting that the folder structure in said transmission origin storage means detected in the folder structure detecting step is one pre-standardized between the transmission origin and the transmission destination to identify an identifying file contained in the folder structure and having a unique structure used to identify the transmission origin; and
a copy activation control step of activating and controlling, on the basis of results of the identification in the identifying file monitoring step, copy means for copying a file other than the identifying file saved to said transmission origin storage means, to the transmission destination storage means.
